**Europäisches Patentamt**

(19) **European Patent Office**

**Office européen des brevets**

(11) Veröffentlichungsnummer: **0 031 880**
**B1**

(12) # EUROPÄISCHE PATENTSCHRIFT

(45) Veröffentlichungstag der Patentschrift:
10.07.85

(51) Int. Cl.⁴: **B 29 C 67/12**

(21) Anmeldenummer: **80106661.4**

(22) Anmeldetag: **30.10.80**

(54) **Verfahren zum Herstellen eines Faserverbundbauteils.**

(30) Priorität: **04.01.80  DE 3000216**

(43) Veröffentlichungstag der Anmeldung:
**15.07.81 Patentblatt 81/28**

(45) Bekanntmachung des Hinweises auf die Patenterteilung:
**10.07.85 Patentblatt 85/28**

(84) Benannte Vertragsstaaten:
**FR GB IT**

(56) Entgegenhaltungen:
**FR - A - 2 124 363**
**FR - A - 2 408 861**
**GB - A - 643 022**
**GB - A - 1 081 911**
**US - A - 2 464 157**
**US - A - 3 629 388**
**US - A - 4 017 238**

(73) Patentinhaber: **Messerschmitt-Bölkow-Blohm Gesellschaft mit beschränkter Haftung, Robert-Koch-Strasse, D-8012 Ottobrunn (DE)**

(72) Erfinder: **Grimm, Wilhelm Georg, Dipl.-Ing., Rüthlistrasse 4, D-8000 München 19 (DE)**
Erfinder: **Schindler, Rudolf, Ing. (grad)., Albrecht-Dürerstrasse 1, D-8014 Neubiberg (DE)**

BUNDESDRUCKEREI BERLIN

## Beschreibung

Die Erfindung bezieht sich auf ein Verfahren zum Herstellen eines Bauteils hoher Oberflächengüte nach dem Oberbegriff des Patentanspruchs 1 bzw. 2.

Bei bekannten Verfahren dieser Art (US-A-2 464 157) wird zur Bauteilherstellung eine gießfähige, thermoplastische Formmasse und als Formfläche eine metallische Oberfläche verwendet, die vor dem Auftragen der Formmasse gleichmäßig dünn mit einer geschlossenen, auf der metallischen Formfläche schwach haftenden, ebenfalls metallischen Trennschicht z. B. aus Silber bedampft wird, um zu verhindern, daß sich die Formmasse beim Erstarren an der metallischen Formfläche festsetzt. Die auf diese Weise mit solchen Formmassen und -flächen erzielbare Rauhtiefe und Welligkeit der Bauteiloberfläche liegt jedoch im allgemeinen weit über denjenigen Grenzwerten, die für eine optisch hochwertige Bauteiloberflächenqualität gefordert werden.

Aufgabe der Erfindung ist es, das Verfahren der genannten Art so auszugestalten, daß sich Bauteile mit optischer Oberflächengüte, d. h. solche, für die die maximal zugelassene Rauhtiefe wesentlich kleiner als 1 µm ist und sogar unter 0,2 µm liegen kann, problemlos herstellen lassen.

Diese Aufgabe wird erfindungsgemäß durch das im Anspruch 1 bzw. 2 gekennzeichnete Verfahren gelöst.

Mit dem erfindungsgemäßen Verfahren wird aufgrund der besonderen Kombination von Faserverbundwerkstoff als Formmasse einerseits, einer Formfläche aus Glas für den Faserverbundwerkstoff andererseits und schließlich einer bestimmten, gleichmäßig dünnen, geschlossenen Beschichtung der Glasformfläche mit einem von flüchtigen Bestandteilen freien Trennmittel ein thermisch äußerst formstabiles Bauteil erhalten, auf das sich die hohe Oberflächenqualität der Glasformfläche beim Aushärten des Faserverbundwerkstoffs nahezu verzerrungsfrei überträgt und das sich im ausgehärteten Zustand leicht von der Glasform trennen läßt. Das erfindungsgemäß hergestellte Faserverbundbauteil ist insbesondere für Anwendungsfälle, etwa im Satellitenbau, geeignet, wo neben einem extrem niedrigen Baugewicht, hohe Steifigkeit und geringem thermischen Ausdehnungskoeffizienten eine optisch hochwertige, im Bereich der sichtbaren Strahlung spiegelglatte Oberflächenbeschaffenheit minimaler Welligkeit und Rauhigkeit gefordert werden.

Bei der im Anspruch 2 gekennzeichnete Alternativlösung wird durch die dünne, faserfreie Zwischenschicht, deren Dicke gemäß Anspruch 3 vorzugsweise kleiner als der Durchmesser der Verstärkungsfasern des Faserverbundwerkstoffs ist, zusätzlich sichergestellt, daß der durch die Schrumpfung der Kunstharzkomponente beim Aushärten bedingte Störeinfluß kleingehalten wird und sich die Faserstruktur nicht auf der Bauteiloberfläche abzeichnet, wenn der Faserverbundwerkstoff etwa unter Druckeinwirkung im Autoklaven aushärtet und die Gefahr besteht, daß sich die Verstärkungsfasern zur Glasformfläche bzw. zur Trennschicht hin durchdrücken.

In weiterer vorteilhafter Ausgestaltung des erfindungsgemäßen Verfahrens wird der Kunstharzkomponente des Faserverbundwerkstoffs bzw. der Zwischenschicht gemäß Anspruch 4 ebenfalls aus Gründen einer geringen Schrumpfung Graphit beigemischt, und um die — wenn auch im allgemeinen geringen Oberflächenfehler, die sich beim Aushärten und bei der Verwendung des Faserverbundbauteils unter der Wirkung von Temperaturänderungen ergeben, noch weitgehender auszuschalten, empfiehlt es sich gemäß den Ansprüchen 5, 12 und 13, die thermischen Ausdehnungskoeffizienten von Glasform und Verstärkungsfasern einerseits und von Kunstharzkomponente und Verstärkungsfasern andererseits zumindest annähernd gleich zu halten. Aus dem gleichen Grund, und um zudem der Faserstruktur selbst eine höhere Stabilität gegen ein örtliches Durchdrücken einzelner Verstärkungsfasern beim Aushärten unter Druckeinwirkung zu verleihen, wird zweckmäßigerweise die Faserstruktur gemäß Anspruch 14 gewählt.

Das Aushärten des Faserverbundwerkstoffs auf der Glasform wird vorzugsweise gemäß den Ansprüchen 6 und 7 im Autoklaven unter Evakuierung des Autoklavenraumes durchgeführt, um mögliche Lufteinschlüsse zu entfernen, wobei der Autoklavendruck wesentlich niedriger als üblich gehalten wird, wieder um der Gefahr entgegenzuwirken, daß sich die Verstärkungsfasern in die Trennschicht durchdrücken und auf der Oberfläche des Faserverbundbauteils abzeichnen.

Die Trennschicht kann aufgedampft werden, wird aber vorzugsweise gemäß Anspruch 8 im Wege der Kathodenzerstäubung auf die Glasformfläche aufgebracht (aufgesputtert), wodurch sich eine äußerst gleichförmige Schichtdicke erzielen läßt und eine Nachbearbeitung der Trennschicht, die die Oberflächengenauigkeit des Faserverbundbauteils beeinträchtigen würde, entfällt. Ebenfalls um durch das Auftragen der Trennschicht verursachte Oberflächenfehler zu vermeiden, ist diese gemäß Anspruch 10 zweckmäßigerweise nicht oder nicht wesentlich dicker als die maximal zugelassene Rauhtiefe des Faserverbundbauteils und hat eine bevorzugte Schichtdicke von etwa 200 bis 400 Å.

Im Prinzip läßt sich als Trennmittel jedes auf Glas aufdampfbare oder aufsputterbare Material verwenden, das an der Glasform nicht stärker als an dem Faserverbundwerkstoff haftet, zweckmäßigerweise aber besteht die Trennschicht gemäß Anspruch 9 aus Gold oder einem ähnlichen Edelmetall, das dann nach dem Entformen des Faserverbundbauteils gemäß Anspruch 11 durch ein geeignetes Lösungsmittel entfernt werden kann. Nach dem Entformen des Faserverbundbauteils zusammen mit der Trennschicht ist die Glasform erneut verwendbar, wird aber zuvor zweckmäßigerweise nach Anspruch 15 von eventuellen Rückständen befreit.

Die Erfindung wird nunmehr anhand eines Ausführungsbeispiels in Verbindung mit den Zeichnungen näher erläutert. Es zeigt

Fig. 1 eine schematische Darstellung einer Zerstäubungskammer zum Aufsputtern der Trennschicht auf die Glasform;

Fig. 2 die aus Glasform und Faserverbundwerkstoff bestehende Anordnung beim Aushärten im Autoklaven;

Fig. 3 eine stark vergrößerte Teildarstellung der Oberflächenstruktur des fertigen Faserverbundbauteils.

Das Verfahren wird anhand der Herstellung eines ebenen Faserverbundbauteils aus mit Kunstharz vorimprägnierten Carbonfasern mit einem Faserdurchmesser d = 8 µm beschrieben.

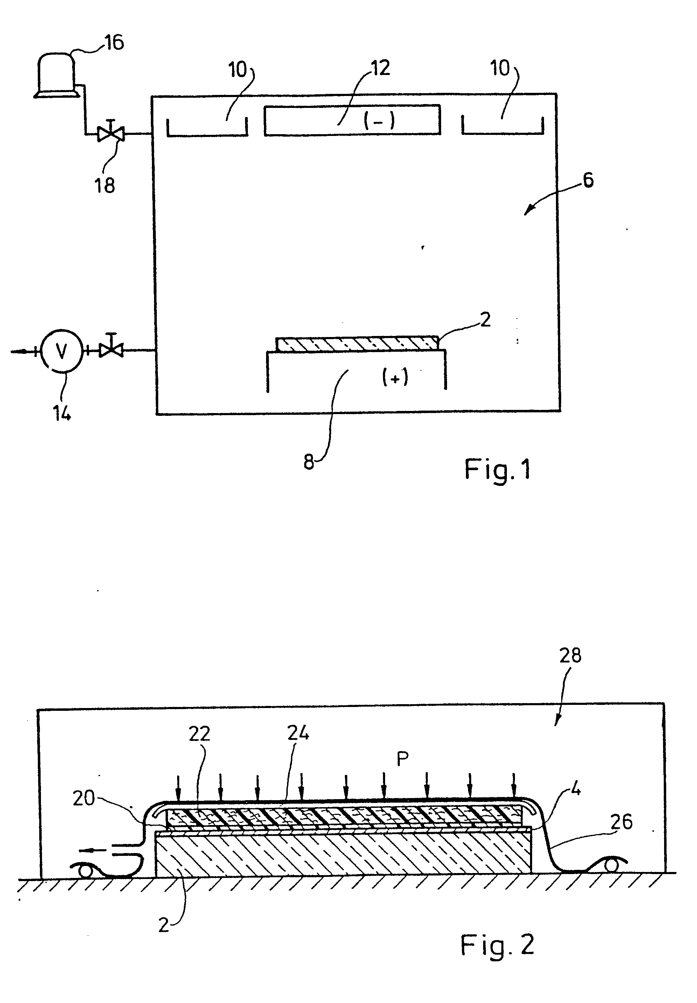

Zunächst wird eine Glasform in Form einer Glaskeramikplatte 2 hergestellt, die durch Schleifen und Polieren auf eine Oberflächenrautiefe von etwa 0,008 µm gebracht wird. Dann wird die polierte Glasformfläche durchgehend mit einer geschlossenen, gleichmäßig dünnen Trennschicht 4 aus Gold überzogen, und zwar wird die Goldschicht 4 entweder aufgedampft oder — wie bevorzugt — durch Kathodenzerstäubung in der in Fig. 1 schematisch gezeigten Zerstäubungskammer 6 aufgebracht (aufgesputtert). Diese enthält einen als Anode wirkenden Substrathalter 8, auf den die Glaskeramikplatte 2 mit der polierten Glasfläche nach oben aufgelegt wird, und ein als Kathode wirkendes, zwischen Abschirmelementen 10 angeordnetes Goldtarget 12. Nach dem Evakuieren der Zerstäubungskammer 6 über eine Vakuumpumpe 14 wird ein Inertgas aus einem Gastank 16 über ein Mikrometerventil 18 in die Kammer 6 eingebracht und eine elektrische Spannung zwischen Substrathalter 8 und Goldtarget 12 angelegt, bis die Glasformfläche mit einer Gold-Trennschicht 4 in der gewünschten Dicke etwa 200—400 Å — besputtert ist.

Die Glasform 2 wird dann mit der Gold-Trennschicht 4 nach oben auf eine Heizplatte gelegt und auf ca. 100—120°C erwärmt. Nunmehr wird eine Zwischenschicht 20 aus faserfreiem Kunstharz in einer Menge von etwa 0,1 g Harz pro cm² Trennschichtfläche aufgetragen. Die Zwischenschicht 20 besteht aus einem Epoxidharzgemisch, das etwa 20% intensiv vermischtes Graphitpulver enthält, um den Schrumpfungskoeffizienten kleinzuhalten. Das Graphit-Harzsystem wird von der Mitte zu den Rändern der Gold-Trennschicht 4 verteilt, und evtl. entstehende Luftblasen werden durch Anblasen der Zwischenschicht 20 mit Heißluft entfernt. Nach dem Anhärten der Zwischenschicht 20 (nach etwa 1 — 2 h) werden die mit Harz vorimprägnierten Carbonfasern in Form einer aus unidirektionalen Faserbündeln bestehenden Faserverbundwerkstoffschicht 22 je nach gewünschten Lagenaufbau und Schichtdicke aufgelegt und mit einer mehrlagigen Abreißfolie 24 abgedeckt.

Diese Anordnung wird dann durch eine flexible Membran 26 druckdicht verschlossen und in einem Autoklaven 28 (Fig. 2) bei etwa 150°C und unter Evakuierung des von der Membran 26 begrenzten Innenraums ausgehärtet. Um ein Durchdrücken der Faserstruktur zu verhindern, wird mit einem reduzierten Autoklavendruck p von etwa 0,5—1,0 bar gearbeitet. Vakuum und Druck sind auch während der Abkühlphase beizubehalten.

Nach dem Aushärten wird das Faserverbundbauteil einschließlich der Gold-Trennschicht 4 von der Glasformplatte 2 abgedrückt, und die Goldschicht 4 läßt sich bei Bedarf mühelos durch ein Lösungsmittel, z. B. Aceton, entfernen. Das fertige Faserverbundbauteil hat dann nahezu die gleiche Oberflächenqualität wie die Glasformplatte 2. Diese ist nach Reinigung mit einem Lösungsmittel, etwa 1-Methylpyrolidon- (2) wiederverwendbar.

Um die durch Temperaturänderungen beim Aushärten und im Gebrauch des Faserverbundbauteils bedingten Oberflächenungenauigkeiten kleinzuhalten, werden für die Glasformplatte 2, die Verstärkungsfasern und das Kunstharz möglichst gleich große thermische Ausdehnungskoeffizienten gewählt. Glaskeramik und Carbonfasern haben annähernd den gleichen Wärmeausdehnungskoeffizienten, hingegen liegt der Ausdehnungskoeffizient üblicher Epoxidharzsysteme etwa 3mal so hoch wie der von Carbonfasern, was bei einem Temperaturgradienten von 150°C und einem Faserdurchmesser d = 8 µm eine Oberflächenrautiefe von etwa 0,013 µm ergibt. Dieser, durch unterschiedliche Wärmeausdehnung bedingte Störeinfluß läßt sich gewünschtenfalls durch Wahl einer geeigneten Fasersorte oder -mischung, deren thermischer Ausdehnungskoeffizient näher an dem der Epoxidharzkomponente liegt, oder evtl. auch dadurch verringern, daß die Betriebstemperatur des Faserverbundbauteils auf oder nahe der Aushärttemperatur gehalten wird.

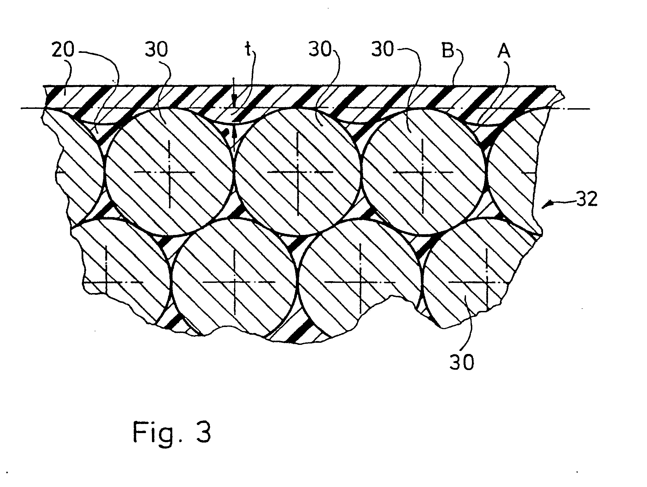

Ein weiterer, die Oberflächengüte des Faserverbundbauteils beeinträchtigender Störfaktor ist der Harzschrumpf, der etwa 3% beträgt. Zur Verringerung dieses Störfaktors ist dem Harzsystem der Zwischenschicht 20 Graphitpulver zugemischt, und wenn diese Zwischenschicht 20 nur die Zwischenräume zwischen den Verstärkungsfasern 30 der obersten Faserlage 32 (Fig. 3) ausfüllt, ergibt sich unter Berücksichtigung des Harzschrumpfes ein zwischen den Einzelfasern 30 konkav gewölbtes Oberflächenprofil A mit einer Rauhtiefe t = 0,12 µm. Um den Einfluß des Harzschrumpfes weiter zu verringern, wird die Zwischenschicht 20 etwas dicker aufgetragen, und die Verstärkungsfasern 30 werden erst nach dem Anhärten der Zwischenschicht 20 auf diese aufgelegt, so daß die in Fig. 3 mit B bezeichnete Bauteil-Oberfläche entsteht.

Die mit dem beschriebenen Verfahren erhaltenen Faserverbundbauteil-Oberflächen sind optisch spiegelnd und haben Rauhtiefen von weniger als 0,2 μm.

**Patentansprüche**

1. Verfahren zum Herstellen eines Bauteils hoher Oberflächengüte aus einer Formmasse, bei dem eine eine glatte Oberfläche aufweisende Form mit einer von dieser lösbaren, geschlossenen Trennschicht gleichmäßig dünn überzogen und anschließend auf die Trennschicht die Formmasse aufgetragen und dann das Bauteil von der Form getrennt wird, dadurch gekennzeichnet, daß als Form eine Glasform mit einer geschliffenen, polierten oder ähnlich glatt bearbeiteten Glasformfläche und als Formmasse ein aushärtbarer Faserverbundwerkstoff verwendet wird, der auf die Trennschicht auflaminiert und nach dem Aushärten des Faserverbundwerkstoffs von der Glasformfläche entformt wird.

2. Verfahren zum Herstellen eines Bauteils hoher Oberflächengüte aus einer Formmasse, bei dem eine eine glatte Oberfläche aufweisende Form mit einer von dieser lösbaren, geschlossenen Trennschicht gleichmäßig dünn überzogen und anschließend auf die Trennschicht die Formmasse aufgetragen und dann das Bauteil von der Form getrennt wird, dadurch gekennzeichnet, daß als Form eine Glasform mit einer geschliffenen, polierten oder ähnlich glatt bearbeiteten Glasformfläche und als Formmasse ein aushärtbarer Faserverbundwerkstoff in der Weise verwendet wird, daß auf die Trennschicht zunächst eine dünne Zwischenschicht aus einer faserfreien Kunstharzkomponente aufgetragen und nach dem Anhärten der Zwischenschicht der Faserverbundwerkstoff auflaminiert und nach dem Aushärten des Faserverbundwerkstoffs das Faserverbundbauteil entformt wird.

3. Verfahren nach Anspruch 2, dadurch gekennzeichnet, daß die Dicke der Zwischenschicht im fertigen Bauteil kleiner als der Durchmesser der Verstärkungsfasern ist.

4. Verfahren nach einem der vorhergehenden Ansprüche, dadurch gekennzeichnet, daß die Kunstharzkomponente des Faserverbundwerkstoffs bzw. der Zwischenschicht einen Graphitanteil von bis zu 30% enthält.

5. Verfahren nach einem der vorhergehenden Ansprüche, dadurch gekennzeichnet, daß die thermische Ausdehnungskoeffizienten der Kunstharzkomponente und der Verstärkungsfasern durch entsprechende Wahl der Fasersorte bzw. Fasermischung aufeinander abgestimmt werden.

6. Verfahren nach einem der vorhergehenden Ansprüche, gekennzeichnet durch Aushärten des Faserverbundwerkstoffs in einem Autoklaven unter mäßigem Autoklavendruck und unter druckdichtem Verschluß und Evakuierung des vom Faserverbundwerkstoff einschließlich der Glasformfläche besetzten Autoklavenraumes.

7. Verfahren nach Anspruch 6, dadurch gekennzeichnet, daß der Autoklavendruck etwa zwischen 0,5 und 1 bar gehalten wird.

8. Verfahren nach einem der vorhergehenden Ansprüche, dadurch gekennzeichnet, daß die Trennschicht im Wege der Kathodenzerstäubung auf die Glasformfläche aufgebracht wird.

9. Verfahren nach einem der vorhergehenden Ansprüche, dadurch gekennzeichnet, daß die Trennschicht aus Gold oder einem ähnlichen Edelmetall besteht.

10. Verfahren nach einem der vorhergehenden Ansprüche, dadurch gekennzeichnet, daß die Trennschicht nicht dicker als die maximale Oberflächenrauhigkeit des Faserverbundbauteils bemessen wird.

11. Verfahren nach einem der vorhergehenden Ansprüche, dadurch gekennzeichnet, daß die nach dem Entformen des Faserverbundbauteils an dessen Oberfläche haftende Trennschicht mit Hilfe eines Lösungsmittels entfernt wird.

12. Verfahren nach einem der vorhergehenden Ansprüche, dadurch gekennzeichnet, daß der thermische Ausdehnungskoeffizient der Glasform etwa gleich dem der Verstärkungsfasern des Faserverbundwerkstoffs gewählt wird.

13. Verfahren nach Anspruch 12, dadurch gekennzeichnet, daß als Glasform eine Glaskeramikform und als Verstärkungsfasern Carbonfasern verwendet werden.

14. Verfahren nach einem der vorhergehenden Ansprüche, dadurch gekennzeichnet, daß die Verstärkungsfasern des Faserverbundwerkstoffs in Form eines unidirektionalen Faserbandes aufgebracht werden.

15. Verfahren nach einem der vorhergehenden Ansprüche, dadurch gekennzeichnet, daß die Glasform zur erneuten Verwendung nach dem Entformen des Faserverbundbauteils an der Glasformfläche mit Hilfe eines Lösungsmittels von Rückständen gereinigt wird.

**Claims**

1. A method of producing a structural member of high quality surface finish from a moulding composition in which method a mould having a smooth surface is coated in a uniformly thin manner with a closed separating layer which is detachable from this and subsequently the moulding composition is applied to the separating layer and then the structural member is separated from the mould, characterised in that used as the mould is a glass mould with a ground, polished or similarly smoothly worked glass mould surface and used as the moulding composition is a hardenable fibre composite material which is laminated onto the separating layer and after the hardening of the fibre composite material is removed from the glass mould surface.

2. A method of producing a structural member of high quality surface finish from a moulding composition in which a mould having a smooth surface is coated in a uniformly thin manner with a closed separating layer which is detachable from this and subsequently the moulding composition is applied to the separating layer and then the structural member is separated from the mould, characterised in that a glass mould with a ground, polished or similarly smoothly worked glass mould surface is used as the mould and a hardenable fibre composite material is used as the moulding composition in such a way that initially a thin intermediate layer of a fibre-free synthetic resin component is applied to the separating layer and after hardening-on of the intermediate layer the fibre composite material is laminated on and after the hardening of the fibre composite material the fibre composite structural member is removed from the mould.

3. A method according to claim 2, characterised in that the thickness of the intermediate layer in the finished structural member is smaller than the diameter of the reinforcement fibres.

4. A method according to one of the preceding claims, characterised in that the synthetic resin component of the fibre composite material or respectively of the intermediate layer contains a graphite proportion of up to 30%.

5. A method according to one of the preceding claims, characterised in that the coefficients of thermal expansion of the synthetic resin component and of the reinforcement fibres are harmonised with one another by appropriate choice of the fibre type or respectively fibre mixture.

6. A method according to one of the preceding claims, characterised by hardening of the fibre composite material in an autoclave under moderate autoclave pressure and under pressure-tight seal and evacuation of the autoclave chamber occupied by the fibre composite material including the glass mould surface.

7. A method according to claim 6, characterised in that the autoclave pressure is held approximately between 0.5 and 1 bar.

8. A method according to one of the preceding claims, characterised in that the separating layer is applied by cathodic sputtering.

9. A method according to one of the preceding claims, characterised in that the separating layer consists of gold or a similar noble metal.

10. A method according to one of the preceding claims, characterised in that the separating layer is dimensioned so as to be not thicker than the maximum surface roughness of the fibre composite structural member.

11. A method according to one of the preceding claims, characterised in that the separating layer adhering, after the removal of the fibre composite structural member from the mould, to the surface of the structural member is removed with the aid of a solvent.

12. A method according to one of the preceding claims, characterised in that the coefficient of thermal expansion of the glass mould is selected approximately equal to that of the reinforcement fibres of the fibre composite material.

13. A method according to claim 12, characterised in that a glass ceramic mould is used as the glass mould an carbon fibres are used as the reinforcement fibres.

14. A method according to one of the preceding claims, characterised in that the reinforcement fibres of the fibre composite material are applied in the form of a unidirectional fibre band.

15. A method according to one of the preceding claims, characterised in that after the removal of the fibre composite structural member from the glass mould, for re-use the mould is cleaned of residues at the glass mould surface with the aid of a solvent.

**Revendications**

1. Procédé de réalisation d'une pièce élémentaire de haute qualité de surface à partir d'une masse à mouler dans lequel on revêt de façon uniformément mince un moule à surface lisse d'une couche de séparation continue détachable de ce dernier, on applique la masse à mouler sur la couche de séparation, puis on sépare du moule la pièce élémentaire, procédé caractérisé par le fait qu'on utilise, comme moule, une forme de verre avec une surface meulée, polie ou usinée à un lissé analogue et, comme masse à mouler, un matériau composite fivreux durcissable que l'on stratifie sur la couche de séparation et que l'on démoule de la surface de la forme de verre après le durcissement.

2. Procédé de réalisation d'une pièce élémentaire de haute qualité de surface à partir d'une masse à mouler dans lequel on revêt de façon uniformément mince un moule à surface lisse d'une couche de séparation continue détachable de ce dernier, on applique la masse à mouler sur la couche de séparation, puis on sépare du moule la pièce élémentaire, procédé caractérisé par le fait qu'on utilise, comme moule, une forme de verre avec une surface meulée, polie ou usinée à un lissé analogue et, comme masse à mouler, un matériau composite fibreux durcissable en apliquant tout d'abord sur la couche de séparation une mince couche intermédiaire d'un constituant de résine synthétique exempt de fibres, puis stratifiant le matériau composite fibreux apres le début du durcissement de ladite couche intermédiaire et démoulant la pièce élémentaire composite après le durcissement du matériau composite fibreux.

3. Procédé selon la revendication 2 caractérisé par le fait que l'épaisseur de la couche intermédiaire dans la pièce élémentaire finie est inférieure au diamètre des fibres de renforcement.

4. Procédé selon l'une des revendications précédentes caractérisé par le fait que le constituant de résine synthétique du matériau composite fibreux ou de la couche intermédiaire renferme une part de graphite pouvant atteindre jusqu'à 30%.

5. Procédé selon l'une des revendications précédentes caractérisé par le fait que l'on accorde entre eux les coefficients de dilatation thermique du constituant de résine synthétique et des fibres de renforcement par un choix approprié du genre ou du mélange des fibres.

6. Procédé selon l'une des revendications précédentes caractérisé par le fait que l'on durcit le matériau composite fibreux dans un autoclave sous une pression d'autoclave modérée et sous fermeture étanche à la pression et mise, sous vide du volume d'autoclave occupé par le matériau composite fibreux, y compris la surface de la forme de verre.

7. Procédé selon la revendication 6, caractérisé par le fait que l'on maintient la pression de l'autoclave approximativement entre 0,5 et 1 bar.

8. Procédé selon l'une des revendications précédentes caractérisé par le fait que l'on applique la couche de séparation par pulvérisation cathodique sur la surface de la forme de verre.

9. Procédé selon l'une des revendications précédentes caractérisé par le fait que la couche de séparation est constituée par de l'or ou par un métal précieux analogue.

10. Procédé selon l'une des revendications précédentes caractérisé par le fait que l'on ne donne pas à la couche de séparation une épaisseur supérieure à la profondeur de rugosité superficielle maximale de la pièce élémentaire composite fibreuse.

11. Procédé selon l'une des revendications précédentes caractérisé par le fait que l'on élimine à l'aide d'un solvant la couche de séparation adhérente à la surface de la pièce élémentaire composite fibreuse après le démoulage de cette dernière.

12. Procédé selon l'une des revendications précédentes caractérisé par le fait que l'on choisit le coefficient de dilatation thermique de la forme de verre en sorte qu'il soit à peu près égal à celui des fibres de renforcement du matériau composite fibreux.

13. Procédé selon la revendication 12 caractérisé par le fait que l'on utilise, comme forme de verre, une forme en céramique de verre et, comme fibres de renforcement, des fibres de carbone.

14. Procédé selon l'une des revendications précédentes caractérisé par le fait que l'on applique les fibres de renforcement du matériau composite fibreux sous la forme d'un ruban de fibres unidirectionnel.

15. Procédé selon l'une des revendications précédentes caractérisé par le fait que l'on nettoie de ses résidus, en vue de sa réutilisation, la forme de verre sur sa surface à l'aide d'un solvant après le démoulage de la pièce élémentaires composite fibreuse.

Fig. 1

Fig. 2

Fig. 3